(19) Europäisches Patentamt
European Patent Office
Office européen des brevets

(11) Veröffentlichungsnummer: **0 382 930 A2**

# (12) EUROPÄISCHE PATENTANMELDUNG

(21) Anmeldenummer: **89123269.6**

(51) Int. Cl.$^5$: **C08L 71/12, C08K 5/01**

(22) Anmeldetag: **15.12.89**

(30) Priorität: **13.02.89 DE 3904207**

(43) Veröffentlichungstag der Anmeldung:
**22.08.90 Patentblatt 90/34**

(84) Benannte Vertragsstaaten:
**AT BE DE FR GB IT NL**

(71) Anmelder: **HÜLS AKTIENGESELLSCHAFT**
**- RSP Patente / PB 15 - Postfach 13 20**
**D-4370 Marl 1(DE)**

(72) Erfinder: **Schmidt, Friedrich Georg, Dr.**
**Kriegerweg 32**
**D-4400 Münster(DE)**
Erfinder: **Beyer, Horst, Dipl.-Ing.**
**Bitterfelder Strasse 9 a**
**D-4370 Marl(DE)**
Erfinder: **Jadamus, Hans, Dr.**
**Hervester Strasse 8**
**D-4370 Marl(DE)**

## (54) Selbstverlöschende, halogenfreie thermoplastische Formmassen.

(57)

2.1. Ziel der Erfindung war die Bereitstellung von Formmassen auf Basis von Polyphenylenethern, die sich durch eine verminderte Brennbarkeit und eine gute Verarbeitbarkeit auszeichnen.

2.2. Die jetzt gefundenen Formmassen enthalten

A 100 Massenteile Polyphenylenether,
B 1 bis 40 Massenteile Dibenzyltoluole und - bezogen auf die gesamte Formmasse -
C 0 bis 30 % Verstärkungsmittel und
D 0 bis 5 % Zusatzstoffe.

2.3. Die Formmassen werden zur Herstellung technischer Artikel wie z. B. Rohre, Platten oder Gehäuse verwendet.

EP 0 382 930 A2

## Selbstverlöschende, halogenfreie thermoplastische Formmassen

Die Erfindung betrifft selbstverlöschende, thermoplastische Formmassen, die als Hauptbestandteil Polyphenylenether enthalten.

Polyphenylenether sind Polymere mit guten thermischen und elektrischen Eigenschaften. Technische Bedeutung hat Poly(2,6-dimethyl-1,4-phenylenether) (PPE) erlangt.

Reines PPE ist aufgrund der hohen Schmelzeviskosität nur schwierig zu verarbeiten, ergibt aber Formkörper mit hoher Formbeständigkeit in der Warme. Allerdings sind diese, insbesondere im Bereich äußerer Kerben, wenig schlagzäh.

Es sind zahlreiche Vorschläge gemacht worden, um die Verarbeitbarkeit und die Kerbschlagzähigkeit der Formmassen zu verbessern (vgl. DE-PS 16 94 255 entsprechend US-PS 3 361 851, DE-PS 16 94 257 entsprechend US-PS 3 383 435 und DE-PS 16 95 290 entsprechend US-PS 3 379 792). Doch hat sich gezeigt, daß der Zusatz von Polyolefinen, Polystyrolen und Polyamiden das Eigenschaftsbild von PPE-haltigen Formmassen nicht in optimaler Weise beeinflußt.

Größere technische Bedeutung haben Abmischungen von Polyphenylenethern mit schlagzähen Polystyrolen erlangt (vgl. DE-PS 21 19 301 und DE-PS 22 11 005). Da der Zusatz von Polystyrol den Schmelzefluß verbessert, lassen sich diese Abmischungen gut zu Formteilen mit ausreichender Zähigkeit verarbeiten, weisen jedoch den Nachteil auf, daß mit zunehmendem Polystyrolgehalt die Brennbarkeit zu- und gleichzeitig die Wärmeformbeständigkeit abnimmt.

Um die Brennbarkeit der PPE-haltigen Formmassen zu vermindern, werden verschiedene Flammschutzmittel eingesetzt. Als geeignet erwiesen sich aromatische Phosphorverbindungen wie z. B. Triphenylphosphat, Diphenylkresylphosphat und/oder Diphenylisopropylphenylphosphat u. ä., die gleichzeitig als Verarbeitungshilfsmittel dienen. Die Verarbeitung bei höherer Temperatur führt jedoch zu Geruchsbelästigungen, wobei nachteilige physiologische Wirkungen der aromatischen Phosphor verbindungen beziehungsweise ihrer Zersetzungsprodukte nicht ausgeschlossen werden können.

Es ist auch bekannt, daß man halogenhaltige Flammschutzmittel verwenden kann. In Frage kommen beispielsweise organische Verbindungen, wie sie z. B. in der Monographie von H. Vogel "Flammfestmachen von Kunststoff", Hüthig-Verlag, 1966, auf den Seiten 94 bis 102 beschrieben werden. Auch halogenierte Polymere, wie z. B. halogenierte Polyphenylenether (z. B. DE-PS 33 34 068), insbesondere bromierte Polyphenylenether oder bromierte Oligo- bzw. Polystyrole mit vorzugsweise mehr als 30 Gew.-% Halogen werden als Flammschutzmittel eingesetzt. Im Falle des Einsatzes von halogenhaltigen Flammschutzmitteln empfiehlt es sich, Verbindungen des Antimons, Bors oder Zinns in Mengen von 0,5 bis 10 Gew.-%, bezogen auf die thermoplastischen Massen zuzusetzen, um die Flammschutzwirkung zu erhöhen.

Ein schwerwiegender Nachteil aller halogenhaltigen organischen Verbindungen ist die Entstehung von stark korrosivem und toxischem Chlor- bzw. Bromwasserstoffgas im Brandfall.

In der DE-OS 29 06 336 wird die Verwendung von speziellen Kohlenwasserstoffen als Synergisten zu organischen Halogenverbindungen, insbesondere Bromverbindungen, für eine Flammschutzausrüstung von expandierbarem Suspensionspolystyrol beschrieben. Geeignete Kohlenwasserstoffe sind z. B. Benzyltoluol und Dibenzyltoluol, auch in Form ihrer Isomerengemische. Hierbei werden neben 0,1 - 3 Gew.-% des Kohlenwasserstoffs Halogenverbindungen in der Menge eingesetzt, daß der Halogengehalt 0,1 - 2 Gew.-% bezogen auf das Styrolpolymerisat beträgt. In einer bevorzugten Ausführungsform sind zusätzlich 0,01 - 0,08 Gew.-% organische Peroxide enthalten, die eine Halbwertszeit des Zerfalls von mehr als 2 Stunden bei 100 °C besitzen. Derartige Massen sind nur zur Herstellung von flammgeschütztem Schaumpolystyrol geeignet und weisen wegen ihres unabdingbaren Halogengehalts die oben genannten Nachteile auf.

Ziel der vorliegenden Erfindung war es somit, selbstverlöschende, halogenfreie thermoplastische Formmassen aufzufinden, die sich einer seits durch eine hervorragende Flammwidrigkeit auszeichnen und andererseits ohne toxische Bedenken eingesetzt werden können. Selbstverständlich sollte die Verarbeitbarkeit der Formmassen nicht beeinträchtigt sein.

Es wurden nun überraschend thermoplastische Massen gefunden, die diesen Anforderungen gerecht werden. Sie enthalten:

A 100 Massenteile Polyphenylenether

B 1 bis 40 Massenteile Dibenzyltoluole und - bezogen auf die gesamte Formmasse -

C 0 bis 30 % Verstärkungsmittel

D 0 bis 5 % Zusatzstoffe.

Unter thermoplastischen Massen sollen im Rahmen dieser Erfindung ungeformte Mischungen angesehen werden, die sich durch thermoplastische Verarbeitung zu Formteilen oder zu Halbzeug verarbeiten lassen. Die thermoplastischen Massen können beispielsweise als Granulat vorliegen.

Als Polyphenylenether A kommen in erster Linie Polyether auf Basis von 2,6-Dimethylphenol in Frage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o′-Dialkylphenole in Frage, deren Alkylrest vorzugsweise höchstens sechs C-Atome besitzt, sofern sichergestellt ist, daß dieser kein alpha-ständiges tertiäres C-Atom aufweist. Jeder der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z. B. in Gegenwart von Kupferaminkomple xen wie Kupferbromid und Morpholin aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 35 bis 80 ml/g. Bevorzugt ist das Polymere des 2,6-Dimethylphenols, der Poly-(2,6-dimethyl-1,4-phenylenether) mit einer Viskositätszahl von 40 bis 70 ml/g (J-Wert nach DIN 53 728).

Die Polyphenylenether werden üblicherweise als Pulver oder Granulate eingesetzt.

Geeignete Dibenzyltoluole besitzen die allgemeine Formel

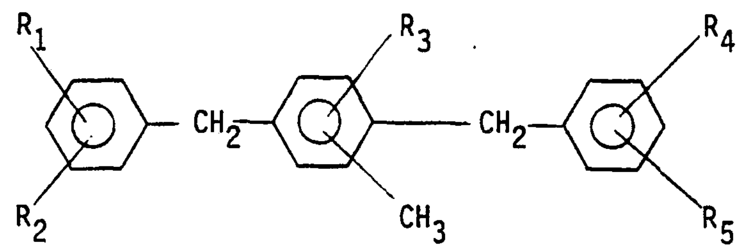

wobei die Reste $R_1$ bis $R_5$ unabhängig voneinander Wasserstoffatome, Alkylgruppen von $C_1$ bis $C_8$, Cycloalkylgruppen von $C_5$ oder $C_6$ oder Arylgruppen von $C_6$ bis $C_{10}$ darstellen. Die Dibenzyltoluole können z. B. nach dem in der deutschen Patentschrift 10 85 877 beschriebenen Verfahren erhalten werden. Sie stellen im allgemeinen Isomerengemische dar, die in dieser Form eingesetzt werden können. Ein derartiges Isomerengemisch ist unter der Bezeichnung MARLOTHERM$^R$ S im Handel erhältlich (Hersteller: HÜLS AKTIENGESELLSCHAFT, D-4370 Marl).

Als Verstärkungsmittel C eignen sich insbesondere Glas- und Kohlenstoffasern.

Die erfindungsgemäßen thermoplastischen Massen können daneben Zusatzstoffe D, wie Pigmente, Oligomere, Antistatika, Stabilisatoren und Verarbeitungshilfsmittel, enthalten. Geeignete Stabilisatoren umfassen organische Phosphite, wie z. B. Didecylphenylphosphit und Trilaurylphosphit, sterisch gehinderte Phenole, Tetramethylpiperidin-, Benzophenon- und Triazolderivate sowie Stabilisatoren auf Basis sterisch gehinderter Amine, sogenannte HALS-Verbindungen. Als Verar beitungshilfsmittel eignen sich Wachse, wie z. B. oxidierte Kohlenwasserstoffe sowie ihre Alkali- und Erdalkalisalze.

Der Anteil der Verstärkungsmittel kann bis zu 30 % und der aller übrigen Zusatzstoffe insgesamt bis zu 5 %, jeweils bezogen auf die gesamte Formmasse, betragen.

Die einzelnen Komponenten werden in bekannter Weise, sowohl im Batchbetrieb als auch kontinuierlich in der Schmelze gemischt.

Für das Schmelzen und Vermischen eignen sich die üblichen Geräte zur Behandlung von hochviskosen Schmelzen. Besonders geeignet sind Doppelschneckenkneter und Kokneter.

Die erfindungsgemäßen Formmassen besitzen nicht nur eine verminderte Brennbarkeit; sie sind mit zunehmendem Gehalt an Dibenzyltoluolen auch leichter verarbeitbar. Überraschenderweise wird durch das Zumischen schon geringer Mengen an Dibenzyltoluolen aber auch der Elastizitätsmodul, d. h. die Steifigkeit, deutlich erhöht.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige Artikel für den Automobil-, Elektro- und Feinwerksektor.

## Experimenteller Teil

Der Poly(2,6-dimethyl-1,4-phenylenether) mit einem J-Wert von 68 ml/g wurde durch oxidative Kupplung von 2,6-Dimethylphenol, Abstoppen der Reaktion und anschließende Reaktionsextraktion gemäß den

DE-OSS 33 13 864 und 33 23 777 erhalten. Das Lösemittel wurde durch Abdampfen entfernt und die Schmelze über einen Entgasungsextruder extrudiert und anschließend granuliert.

Als Dibenzyltoluol wurde MARLOTHERM$^R$ S der Fa. Hüls AG, D-4370 Marl eingesetzt. Die Eigenschaften dieses Produktes sind der Broschüre "MARLOTHERM$^R$", Nr. 1050/November 1987 der Hüls AG zu entnehmen.

Die Mischungen wurden auf einem Doppelschneckenkneter ZSK 30M9/2 der Firma Werner & Pfleiderer bei Temperaturen zwischen 260 und 290 °C bei einer mittleren Verweilzeit von ca. 3 Minuten hergestellt. Das MARLOTHERM$^R$ S wurde hierbei der Polyphenylenetherschmelze als Flüssigkeit zudosiert. Nach Granulieren und Trocknung wurden die Produkte im Spritzguß zu Prüfkörpern verarbeitet. Der Elastizitätsmodul (Zugversuch) wurde nach DIN 53 457, die Vicat-Erweichungstemperatur nach Methode B der DIN 53 460 und der Schmelzindex (MVI) nach DIN 53 735 bei einer Temperatur von 300 °C und einer Belastung von 10 kg bestimmt. Das Brandverhalten unter Berücksichtigung des Abtropfens des geschmolzenen Materials wurde nach dem UL 94-Test der Underwriters Laboratories Inc. (Fassung Januar 1980) beurteilt.

| Zusammensetzung der Beispiele: | | | | | |
|---|---|---|---|---|---|
| | A | 1 | 2 | 3 | 4 |
| Polyphenylenether | 100 | 94,4 | 90,5 | 89,1 | 84,1 |
| MARLOTHERM$^R$ S | - | 5,6 | 9,5 | 10,9 | 15,9 |

| Eigenschaften der Formmassen: | | | | | |
|---|---|---|---|---|---|
| | A | 1 | 2 | 3 | 4 |
| MVI ($cm^3$/10 min) 10 kg/300 °C DIN 53 735 | < 3 | 15 | 36 | 49 | 142 |
| Vicaterweichungstemperatur Methode B (°C) DIN 53 460 | 204 | 175 | 155 | 146 | 117 |
| UL 94 3,2 mm | keine Einstufung | V-O | V-O | V-O | V-O |
| Gesamtbrenndauer von 5 Prüfköpern (1.+2. Beflammung) (sec.) | 127 | 43 | 13 | 33 | 29 |
| Elastizitäts-Modul (Zugversuch) ($N/mm^2$) DIN 53 457 | 2 500 | 2 810 | 2 910 | 2 800 | 2 880 |

Wie aus den experimentellen Werten ersichtlich ist, wird bei den erfindungsgemäßen Formmassen durch das Zumischen des Dibenzyltoluol-Isomerengemischs die Brennbarkeit stark herabgesetzt. Zudem steigt mit zunehmendem Gehalt an Dibenzyltoluolen der Schmelzfluß, also die Verarbeitbarkeit, stark an, was allerdings mit einer erniedrigten Vicat-Erweichungstemperatur erkauft wird. Überraschenderweise wird aber auch der Elastizitätsmodul des reinen Polymeren durch das Zumischen der Dibenzyltoluole deutlich gesteigert.

## Ansprüche

1. Selbstverlöschende, thermoplastische Formmassen auf Basis von Polyphenylenethern,
dadurch gekennzeichnet,
daß die Formmassen
A 100 Massenteile Polyphenylenether
B 1 bis 40 Massenteile Dibenzyltoluole und - bezogen auf die gesamte Formmasse -
C 0 bis 30 % Verstärkungsmittel und

D 0 bis 5 % Zusatzstoffe enthalten.

2. Thermoplastische Formmassen nach Anspruch 1, dadurch gekennzeichnet, daß als Polyphenylenether ein Polymeres des 2,6-Dimethylphenols mit einer Viskositätszahl von 40 bis 70 ml/g eingesetzt wird.